# EUROPÄISCHE PATENTSCHRIFT

(11) **EP 2 393 337 B1**
(45) Veröffentlichungstag und Bekanntmachung des Hinweises auf die Patenterteilung: **23.01.2013**
(21) Anmeldenummer: 10165071.1
(22) Anmeldetag: 07.06.2010
(51) Int. Cl.: H05B 3/84, B60R 1/06

(54) **Heizeinrichtung**
Heating device
Dispositif de chauffage

(43) Veröffentlichungstag der Anmeldung: 07.12.2011
(73) Patentinhaber: SMR Patents S.à.r.l., 1653 Luxembourg (LU)
(72) Erfinder: Fritz, Daniel, 70186, Stuttgart (DE)
(74) Vertreter: Weber-Bruls, Dorothée

(56) Entgegenhaltungen:
- EP-A1- 0 112 930
- DE-T1- 3 790 327
- US-A- 4 251 316
- US-A- 5 610 756

## Beschreibung

Die Erfindung betrifft eine Heizeinrichtung für ein Spiegelglas eines Spiegels, insbesondere eines Außenspiegels für ein Kraftfahrzeug, wobei eine Heizung auf ein Substrat aufgebracht wird, sowie ein Verfahren zur Herstellung eines solchen Spiegels.

Aus der EP 0 732 865 B1 ist eine Heizeinrichtung bekannt, die von Karbonfasern gebildet wird, die stromleitend über ein Bindemittel miteinander verbunden sind. Über eine Haftschicht ist ein Spiegelglas auf eine Trägerplatte für das Spiegelglas aufgebracht.
Ferner ist es bekannt, rückseitig auf das Spiegelglas eines Spiegels direkt durch ein Siebdruckverfahren oder dergleichen eine Heizung aufzubringen. Wie aus der FR 2 628 041 A1 hervorgeht, ist die Reflexionsschicht jedoch dann außenseitig auf dem Spiegelglas angebracht, mit erhöhter Gefahr von Beschädigungen der Reflexionsschicht. Außerdem soll bei dem bekannten Verfahren die leitfähige Paste bei einer Temperatur von etwa 670° eingebrannt werden, woraus Probleme bei der Einhaltung der Biegegenauigkeit bei sphärischen und asphärischen Spiegelgläsern resultieren können.
Daneben ist es beispielsweise aus der DE 10 2004 002 979 A1 bekannt, die rückseitige Reflexionsschicht an einem Spiegelglas direkt als Heizschicht auszubilden.
Dabei ist es jedoch problematisch, den Stromfluss in der dünnen Reflexionsschicht gleichmäßig zu verteilen sowie die Kontaktierung vorzunehmen.
Die DE 42 23 590 A1 zeigt einen Spiegel, bei dem auf der Vorderseite des Spiegelglases eine durchsichtige Heizungseinrichtung als ITO-Schicht angebracht ist, die von einer Schutzschicht abgedeckt wird, die beispielsweise durch Sputtern oder im Plasmaauftrag angebracht wird. Bei dieser Anordnung bestehen die bekannten Probleme in der Kontaktierung dünner Schichten. Außerdem ist die ITO-Schicht sehr empfindlich gegen Beschädigungen, die zu lokalen Überhitzungen (hot spots) führen können.

Ferner beschreibt die FR 2 613 396 A1 eine Trägerfolie für ein Spiegelglas, mit einer durch Siebdruck aufgebrachten Heizeinrichtung. An der dem Spiegelglas zugewandten Vorderseite der Heizeinrichtung wird über ein Doppelklebeband eine sichere Verbindung zwischen Spiegelglas und Trägerfolie hergestellt. Außerdem wird hierdurch die Heizeinrichtung abgedichtet.

Weiter ist es allgemein bekannt, eine Widerstandsheizung für ein Spiegelglas in Form einer kaschierten Kupferfolie im Fotoätzverfahren herzustellen und die Kupferfolie anschließend mit einem Doppelklebeband auf der Trägerplatte zu befestigen.

Dem gesamten Stand der Technik ist es gemein, dass eine gleichmäßige Heizung über das gesamte Spiegelglas erzielt werden soll. Es sollen dabei heiße Stellen vermieden werden, und natürlich Stromspitzen in den Heizleitungen um eine Durchbrennen der Heizleistungen oder ein Abdampfen der Heizschicht zu vermeiden.

US 5610756, gemäß den Oberbegriff des Patentanspruchs 1, befasst sich mit einer Spiegelheizung für einen elektrochromatischen Spiegel. Um diesen Spiegel optimal zu betreiben sind für die Heizung zwei unterschiedliche Modii vorgesehen. Ein erster Zustand heizt einen Kernbereich schnell auf, um den Spiegel abzutauen. Im zweiten Modus wird die gesamte Fläche beheizt, um eine optimale Betriebstemperatur für die elektrochemischen Prozesse zu gewährleisten.

Die EP0112930 zeigt eine beheizbare Heckscheibe mit einem Heizfaden, der in Form eines Logos verläuft.

US4251316 zeigt einen heizbaren Außenspiegel, in dem ein Logo in einer gegen die Heizung isolierten Fläche gebildet wird.

Aufgabe der Erfindung ist es, eine Heizeinrichtung für ein Spiegelglas eines Spiegels, insbesondere eines Außenspiegels eines Kraftfahrzeuges, bereitzustellen, die entgegen dem Stand der Technik einen ungleichmäßige Heizleistung zur Verfügung stellt und dadurch das Erscheinen eines Zeichens oder Logos, z. B. des Herstellerlogos des Fahrzeugs während des Abtauvorgangs ermöglicht.

Diese Aufgabe wird durch eine Heizeinrichtung mit den Merkmalen gelöst, die zu beheizende Fläche in mindestens zwei Bereiche aufzuteilen und die mindestens zwei Bereiche mit unterschiedlicher Heizleistung oder unterschiedlichem zeitlichem Heizverlauf zu beaufschlagen.

Die Herstellung der Heizschicht kann dabei mit allen bekannten Verfahren erfolgen.

Die Erfindung wird am Beispiel einer konventionellen Klebefolie mit Heizleitungen erläutert. Die bekannte Herstellung einer Widerstandsheizung aus einer kaschierten Kupferfolie im Photoätzverfahren resultierte in einer flexiblen Folie, die anschließend mit einem Doppelklebeband auf der Rückseite des Spiegels befestigt wird. Die Heizleitungen weisen dabei gleiche Abstände, Dicken und Breiten auf, damit die angelegte Spannung in einem möglichst gleichmäßigen Stromfluss resultiert.

Vorteilhafte Ausgestaltungen der Erfindung sind Gegenstand der Unteransprüche. Ein mögliches Ausführungsbeispiel der Erfindung ist in der Zeichnung dargestellt und wird nachfolgend näher erläutert. Es zeigt:
Fig. 1 eine Heizfolie im Stand der Technik
Fig. 2 eine erfindungsgemäße Heizfolie in der Draufsicht
Fig. 3 eine zweite erfindungsgemäße Ausführung
Fig. 4 eine beschichtete Ausführungsform

Eine Trägerplatte 1 für einen nicht näher dargestellten Spiegel, insbesondere einen Außenspiegel für ein Kraftfahrzeug, weist an der einem nicht dargestellten Spiegelglas zugewandten Vorderseite eine Fläche 3 auf. Die Fläche 3 ist Teil einer Heizeinrichtung und ist mit einer mäanderförmigen Leiterbahn 2 versehen. Die Fläche 3 beschreibt einen ersten Bereich der Trägerplatte oder Folie, die geheizt wird. Die Enden 6 der Leiterbahn 2 sind an einer Seite der Fläche 3 herausgeführt und mit abgewinkelten Kontakten 4 verlötet.
Die Trägerplatte 1 besteht aus einem Kunststoffmaterial und wird aus einer Folie gestanzt oder ist in einer anderen Ausführung m Spritzgießverfahren hergestellt. Als Material für die Trägerplatte 1 eignen sich alle Arten von Kunststoffen, die im Spritzgießverfahren verarbeitet werden können.

Die Leiterbahn 2 ist mäanderförmig in einer Vielzahl von Schleifen an der Vorderseite der Fläche 3 aufgespritzt. Bei der Auswahl des Widerstandswerkstoffs spielt unter anderem die zur Verfügung stehende Fläche der Trägerplatte 1 eine Rolle. Ausgegangen wird hierbei beispielsweise von einer Querschnittsfläche der Leiterbahn 2 von 0,2 mm² und einem gewünschten Widerstand von 6 Ohm, um bei einer Bordnetzspannung von 12 Volt einen Heizstrom von 2 Ampere und damit eine elektrische Leistung von 24 Watt zu erreichen.
Die Heizeinrichtung (Leiterbahn 2) und ihre Heizleistung sind so zu bemessen, dass ein schnelles und gleichmäßiges Abtauen des Spiegels von Beschlag und/oder Eis erreicht wird.

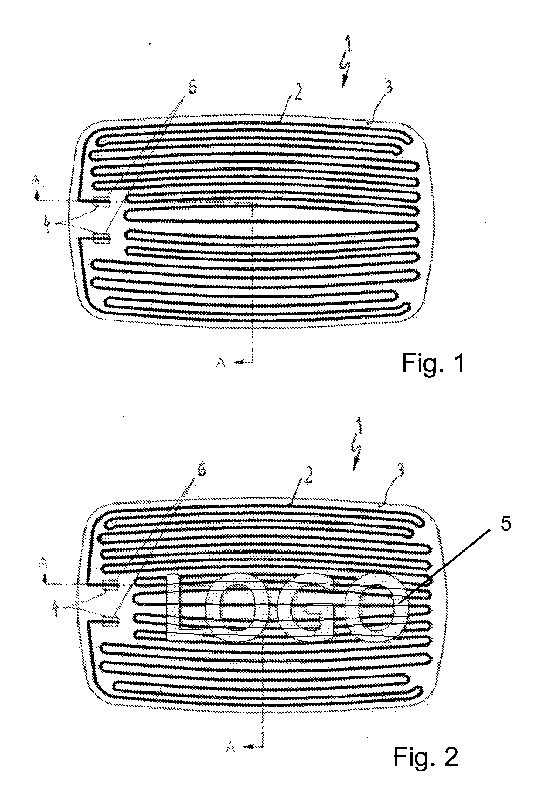

Wie in Figur 2 dargestellt wird die Heizeinrichtung so modifiziert, dass beim Abtauen des Spiegels ein Logo im Bereich 5 erscheint. Der zweite Bereich 5 umfasst die Fläche, die durch die Buchstaben oder Zeichen eines Logos gebildet werden. Dazu werden die Heizleitungen 3 in ihrer Querschnittsfläche über eine Länge reduziert, die der Abmessung des Logos entspricht. Durch die Verjüngung des Querschnitts erhöhen sich der Widerstand und damit der Heizstrom lokal. Dadurch wird eine höhere Heizleistung lokal in Bereich der Abmessungen des Logos erreicht. Der abzutauende Spiegel wird somit zuerst im Bereich des Logos abgetaut, die Struktur erscheint während der Zeit, während der der Rest des Spiegels noch vereist oder beschlagen ist. Innerhalb des vom Hersteller gewünschten Zeitraums wird der gesamte Spiegel beschlagfrei.

Alternativ ist die Anwendung in inverser Form, bei der der Bereich des Logos weniger Heizleistung erhält und daher als vereist oder beschlagene Struktur stehen bleibt, bevor er in Sollzeitraum abtaut.

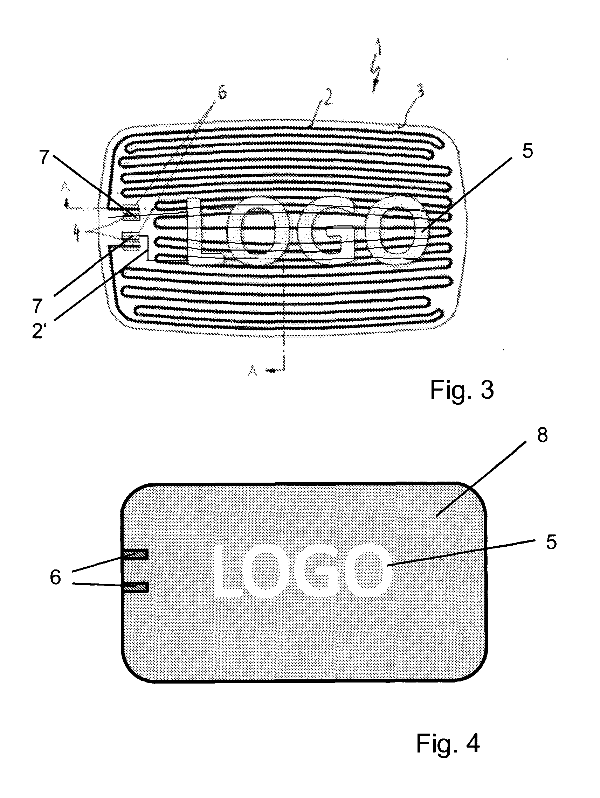

Abweichend vom dargestellten Ausführungsbeispiel können auch zwei oder mehrere getrennte Heizkreise mit elektrisch voneinander getrennten Leiterbahnen 2, 2' und Kontakten 4 und 7 vorgesehen sein, wie in Fig.3 angedeutet. In dieser Ausführungsform ist die gezielte getrennte Ansteuerung zweier Bereiche der Heizvorrichtung möglich. Die Auslegung zweier getrennter Heizkreise vereinfacht die Auslegung des gesamten Heizungselements. Es müssen keine Übergänge zwischen unterschiedlichen Querschnitten der Heizleiter vorgesehen werden. Die Gefahr des Durchbrennens ist reduziert.

Mit dem Einsatz von zwei getrennten Heizkreisen, ist eine weitere Ausführungsform zu erreichen. Die Heizdrähte eines der des Heizkreise werden dabei entlang der Kontur eines Logos oder Zeichens verlegt Das Logo wird dabei direkt mit abgetaut. Diese Ausführungsform eignet sich vor allem für Logos, die nicht zu enge Radien aufweisen, damit der Stromfluß im Heizleiter nicht durch diese engen Radien geführt werden muss.

Mit zwei getrennten Heizkreisen lässt sich auch eine Lösung realisieren, die zuerst einen ersten Heizkreis ansteuert und mit einer zeitlichen Verzögerung den zweiten Heizkreis. Mit dieser zeitgetakteten Lösung lässt sich die Gesamtabtaung im gewünschten Rahmen erreichen und die Auslegung der Heizkreise optimieren. Die zeitliche Verzögerung wird über eine Schaltung mit einem Zeitglied realisiert.

Die Ansteuerung der Heizkreise lässt sich auch mit einem Thermistor realisieren. Erwärmt sich der erste Teilbereich des Spiegels und somit der Thermistor, schaltet er den zweiten Heizkreis dazu. Dadurch erhält man eine temperaturgesteuerte getaktete Lösung für die beiden Heizzonen. Für diese Lösung ist die Beschaltung der Heizung auf der zu beheizenden Oberfläche anzubringen, da die Oberflächentemperatur den Thermistor steuert.

Figur 4 zeigt eine Ausführungsform, die mit einer flächigen Beschichtung zur Erwärmung eines Spiegels arbeitet. Der Bereich 5 des Logos ist von der Beschichtung ausgenommen. Der Rest der Beschichtung muss so ausgelegt sein, dass trotz der Aussparungen ein homogener Stromfluß gewährleistet ist und die ausgesparten Flächen durch Wärmeleitung ebenfalls innerhalb des gewünschten Zeitraums abgetaut sind.
Wählt man einen flächige Beschichtung ist einen Strukturierung , z.B. in mäanderformigen Heizleitungen mit einem Laser möglich. Die Strukturierung mit einem Laser ermöglicht auch das vereinfachte Einschreiben eines Logos in die leitende Schicht. Durch die Wahl der Laserleistung zusammen mit der Schreibgeschwindigkeit lässt sich auch ein Teilabtrag der leitenden Schicht im Bereich des Logos erzielen, so dass in diesem Bereich durch den höheren Widerstand eine größere Erwärmung auftritt.

Alternativ kann der Auftrag der Heizleitungen mit unterschiedlichen Spitzverfahren erfolgen.
Beim Lichtbogenspritzverfahren wird ein Lichtbogen zwischen zwei drahtförmigen Spritzzusätzen gleicher oder unterschiedlicher Zusammensetzung benutzt, um die Drahtspitze abzuschmelzen. Mit einem oder mehreren Gasstrahlen, meist Druckluft, wird das geschmolzene Material zerstäubt und auf die vorbereitete Oberfläche der Zwischenschicht geschleudert.
Zur Verbesserung der Eigenschaften der aufgetragenen Widerstandsbahn kann das Schutzgaslichtbogenspritzverfahren angewandt werden. Bei diesem Verfahren wird eine geringere Porosität und eine verminderte Oxidation in der Schicht des aufgetragenen Widerstandswerkstoffes erreicht. Durch einen Zweitgasstrom in einem Schutzkörper oder durch einen Schutzgasmantel um den Lichtbogen und den Spritzstrahl herum wird ein Eindringen von Luft in den heißen Gas- und Partikelstrom verhindert. Zur Erhöhung der Dichte des Widerstandswerkstoffes kann zusätzlich die Geschwindigkeit des Spritzstrahls erhöht werden. Hierdurch wird die Kontaktzeit der Partikel des Widerstandswerkstoffes mit dem Zerstäuber- und Schutzgas reduziert.
Als Widerstandswerkstoff können Eisenmetalle, Nichteisenmetalle, leitfähige Kunststoffe, Cermets (gesinterte Keramikmetalle) etc. verarbeitet werden. Auch spezielle Legierungen mit entsprechend ausgewähltem spezifischem ohmschem Widerstand können verarbeitet werden.
Der Auftrag des Widerstandwerkstoffs kann kontinuierlich entlang des gewünschten Verlaufs der Leiterbahn erfolgen. In einer bevorzugten Ausführung der Erfindung wird zur Beschleunigung des Materialauftrags eine Maske verwendet, die diejenigen Bereiche der Fläche 3 abdeckt, auf die kein Widerstandswerkstoff aufgetragen werden soll, so dass der Auftrag des Widerstandswerkstoffs flächig erfolgen kann.. Neben dem Aufbringen des Widerstandswerkstoffes der Leiterbahn kann die Peripherie der Heizeinrichtung durch ein thermisches Spritzverfahren aufgespritzt werden. Hierbei kann es sich beispielsweise um die Stromzuführung für die Leiterbahn handeln, die von einem hoch leitenden Werkstoff gebildet wird. In analoger Weise können auch isolierende Werkstoffe mit einem thermischen Spritzverfahren aufgebracht werden.

Die elektrische Isolierung der Heizeinrichtung gegenüber der Reflexionsschicht des Spiegelglases erfolgt durch einen Kleber oder einen Isolierlack. Dem Kleber bzw. Isolierlack kommt hierbei eine doppelte Funktion zu, nämlich einerseits die elektrische Isolierung und andererseits die Verbindung des Spiegelglases mit dem Heizelement. Über den Kleber bzw. den Isolierlack wird die gegenüber mechanischen Beanspruchungen und Umwelteinflüssen empfindliche Reflexionsschicht des Spiegelglases geschützt.
Der Begriff "Spiegelglas" wird in Zusammenhang mit der vorliegenden Erfindung nicht nur für mineralisches Glas verwendet, sondern auch für alle denkbaren anderen durchsichtigen Substrate, beispielsweise aus thermoplastischen oder duroplastischen Werkstoffen.

Die erfindungsgemäße Lösung ist nicht auf Darstellung von Logos beschränkt. Jede Art von Hinweis oder Zeichen kann dargestellt werden.

## Patentansprüche

1. Heizeinrichtung für einen Außenrückblickspiegel bestehend aus einem Substrat auf das mindestens ein heizbares Element (2,2',8) aufgebracht ist, das im flächigen Kontakt mit dem reflektierenden Spiegelelement des Außenrückblickspiegels steht, wobei das mindestens eine heizbare Element (2,2',8) mit mindestens zwei elektrischen Kontakten (6, 7) an eine Stromversorgung anschließbar ist, **dadurch gekennzeichnet, dass** die zu beheizende Fläche in mindestens zwei Bereiche (3, 5) aufgeteilt ist und die mindestens zwei Bereiche mit unterschiedlicher Heizleistung oder unterschiedlichem zeitlichem Heizverlauf beaufschlagt sind und wobei auf der Oberfläche des abzutauenden reflektierenden Spiegefelements ein Zeichen im zweiten Bereich (5) darstellbar ist.

2. Heizeinrichtung nach Anspruch 1 **dadurch gekennzeichnet, dass** die mindestens zwei Bereiche Heizleitungen (2) mit unterschiedlichen Widerstand aufweisen.

3. Heizeinrichtung nach Anspruch 1 **dadurch gekennzeichnet, dass** die mindestens zwei Bereiche Heizleitungen (2) mit unterschiedlichen Querschnitt aufweisen.

4. Heizeinrichtung nach Anspruch 1 **dadurch gekennzeichnet, dass** die mindestens zwei Bereiche Heizleitungen (2) von einem Kontaktpaar mit Strom versorgt werden.

5. Heizeinrichtung nach Anspruch 1 **dadurch gekennzeichnet, dass** die mindestens zwei Bereiche Heizleitungen (2) von mehreren Kontaktpaaren mit Strom versorgt werden.

6. Heizeinrichtung nach Anspruch 1 **dadurch gekennzeichnet, dass** die mindestens zwei Bereiche Heizleitungen (2) mit zeitlichem Versatz mit Strom versorgt werden.

7. Heizeinrichtung nach Anspruch 6 **dadurch gekennzeichnet, dass** der zeitliche Versatz durch einen Zeitglied in der Heizungsschaltung erfolgt.

8. Heizeinrichtung nach Anspruch 6 **dadurch gekennzeichnet, dass** der zeitliche Versatz durch Einsatz eines Thermistors in der Heizungsschaltung erfolgt.

9. Heizeinrichtung nach Anspruch 1 **dadurch gekennzeichnet, dass** die mindestens zwei Bereiche Heizleitungen (2) von einem Kontaktpaar mit Strom versorgt werden.

10. Heizeinrichtung nach Anspruch 1 **dadurch gekennzeichnet, dass** das Zeichen als zuerst abgetauter Bereich erscheint.

11. Heizeinrichtung nach Anspruch 1 **dadurch gekennzeichnet, dass** das Zeichen
als nichtabgetauter Bereich stehen bleibt.

12. Außenrückblickspiegel mit einer Heizeinrichtung nach einem der
vorhergehenden Ansprüchen.

## Claims

1. A heating device for an external rear view mirror, consisting of a substrate onto which at least one heatable element (2, 2', 8) is placed which is in surface-to-surface contact with the reflecting mirror element of the external rear view mirror, wherein the at least one heatable element (2, 2', 8) can be connected with at least two electrical contacts (6, 7) to a power supply, **characterized in that** the area to be heated is divided into at least two regions (3, 5) and different heating powers or different heating progressions over time are applied to the at least two regions, and wherein a logo can be displayed in the second region (5) on the surface of the reflecting mirror element to be defrosted.

2. The heating device according to claim 1, **characterized in that** the at least two regions have heating lines (2) with different resistances.

3. The heating device according to claim 1, **characterized in that** the at least two regions have heating lines (2) with different cross-sections.

4. The heating device according to claim 1, **characterized in that** the at least two regions of heating lines (2) are supplied with power by one pair of contacts.

5. The heating device according to claim 1, **characterized in that** the at least two regions of heating lines (2) are supplied with power by multiple pairs of contacts.

6. The heating device according to claim 1, **characterized in that** the at least two regions of heating lines (2) are supplied with power with a temporal offset.

7. The heating device according to claim 6, **characterized in that** the temporal offset is effected by a timing element in the heating circuit.

8. The heating device according to claim 6, **characterized in that** the temporal offset is effected by using a thermistor in the heating circuit.

9. The heating device according to claim 1, **characterized in that** the at least two regions of heating lines (2) are supplied with power by one pair of contacts.

10. The heating device according to claim 1, **characterized in that** the logo shows up as the region which is defrosted first.

11. The heating device according to claim 1, **characterized in that** the logo remains as a non-defrosted region.

12. An external rear view mirror having a heating device according to any one of the preceding claims.

## Revendications

1. Dispositif de chauffage pour un rétroviseur extérieur, constitué d'un substrat sur lequel est monté au moins un élément chauffant (2, 2', 8), qui est en contact plein avec l'élément de rétroviseur réflecteur du rétroviseur extérieur, de telle sorte que le au moins un élément chauffant (2, 2', 8) est raccordé à l'aide d'au moins deux contacts électriques (6, 7) à une alimentation électrique,
**caractérisé en ce que**
la surface devant être chauffée est divisée en au moins deux zones (3, 5), et les au moins deux zones sont activées par un câble chauffant différent ou une libération de chaleur différente au cours du temps, et de sorte que sur la surface supérieure des éléments de rétroviseur réflecteurs à dégivrer, un symbole peut être exposé dans la deuxième zone (5).

2. Dispositif de chauffage selon la revendication 1, **caractérisé en ce que** les au moins deux zones comportent des câbles chauffants (2) ayant une résistance différente.

3. Dispositif de chauffage selon la revendication 1, **caractérisé en ce que** les au moins deux zones comportent des câbles chauffants (2) ayant une section transversale différente.

4. Dispositif de chauffage selon la revendication 1, **caractérisé en ce que** les au moins deux zones comportent des câbles chauffants (2) alimentés en courant par une paire de contacts.

5. Dispositif de chauffage selon la revendication 1, **caractérisé en ce que** les au moins deux zones comportent des câbles chauffants (2) alimentés en courant par plusieurs paires de contacts.

6. Dispositif de chauffage selon la revendication 1, **caractérisé en ce que** les au moins deux zones comportent des câbles chauffants (2) alimentés en courant avec un retard temporel.

7. Dispositif de chauffage selon la revendication 6, **caractérisé en ce que** le retard temporel survient au moyen d'un cadenceur situé dans le circuit de chauffage.

8. Dispositif de chauffage selon la revendication 6, **caractérisé en ce que** le retard temporel survient au moyen du retard d'une thermistance située dans le circuit de chauffage.

9. Dispositif de chauffage selon la revendication 1, **caractérisé en ce que** les au moins deux zones comportent des câbles chauffants (2) alimentés en courant par une paire de contacts.

10. Dispositif de chauffage selon la revendication 1, **caractérisé en ce que** le symbole apparaît en tant que zone dégivrée en premier.

11. Dispositif de chauffage selon la revendication 1, **caractérisé en ce que** le symbole subsiste en tant que zone qui n'est pas dégivrée.

12. Rétroviseur extérieur doté d'un dispositif de chauffage selon l'une quelconque des revendications précédentes.
